# EUROPEAN PATENT APPLICATION

(11) **EP 4 242 044 A1**
(43) Date of publication of application: **13.09.2023**
(21) Application number: 21929979.9
(22) Date of filing: 29.12.2021
(51) Int. Cl.: B60L 53/30

(54) **ALTERNATING-CURRENT CHARGING ASSEMBLY AND ALTERNATING-CURRENT CHARGING DEVICE**

(30) Priority: 12.03.2021 CN 202110268129
(71) Applicant: Xi'an Linchr New Energy Technology Co., Ltd., Xi'an, Shaanxi 710000 (CN)
(72) Inventor: ZHOU, Qiang, Xi'an, Shaanxi 710000 (CN); WEI, Haiqiang, Xi'an, Shaanxi 710000 (CN); XUE, Yaping, Xi'an, Shaanxi 710000 (CN); YOU, Hao, Xi'an, Shaanxi 710000 (CN)
(74) Representative: Casalonga
(86) International application number: PCT/CN2021/142716
(87) International publication number: WO 2022/188517

(57) **Abstract**

Provided are an alternating-current charging assembly and an alternating-current charging device. The alternating-current charging assembly comprises a casing, a circuit board and a functional mechanism. The circuit board is mounted inside the casing, and the circuit board is provided with an input end and an output end. The functional mechanism is arranged on the circuit board, and is configured to control the connection and disconnection between the input end and the output end based on an energization parameter of the circuit board. By means of the alternating-current charging assembly and the alternating-current charging device provided in the present disclosure, the overall structure of the alternating-current charging assembly can be simplified, thereby facilitating layout and promotion.

## Description

### Cross-Reference to Related Application

The present disclosure claims priority to Chinese Patent Application No. 202110268129.0 filed to the China National Intellectual Property Administration on March 12, 2021 and entitled "Alternating-Current Charging Assembly and Alternating-Current Charging Device", the entire contents of which are herein incorporated by reference.

### Technical Field

The present disclosure relates to the field of microgrids, and in particular to an alternating-current charging assembly and an alternating-current charging device.

### Background

A new energy vehicle refers to a vehicle that uses unconventional vehicle fuels as power sources, mainly including a hybrid electric vehicle, a pure electric vehicle, a fuel cell electric vehicle, etc. In order to refuel the new energy vehicle, it is usually necessary to charge a battery of the vehicle. At present, there are mainly two methods of charging, namely direct-current charging and alternating-current charging. Herein, the direct-current charging requires a large area and is generally used in public charging stations to charge operating vehicles, while the alternating-current charging is more suitable for large-scale deployment in units, parks, residential parking lots and other places suitable for long-term parking, and the charging convenience is higher than that of the public charging stations. Therefore, alternating-current charging is becoming more and more popular.

An alternating-current charging pile usually includes a casing and functional electrical components (such as a switch, a controller and a metering energy meter) arranged in the casing. These functional electrical components are connected by wires. After connected to a power grid, the charging pile is docked to a charging interface of the new energy vehicle, so as to realize the charging of the new energy vehicle.

However, in the current alternating-current charging pile, each functional device is connected by wires, which leads to large volume of the charging pile, complicated wiring, and low production efficiency, thus being disadvantaged to the layout and promotion of the charging pile.

### Summary

Embodiments of the present disclosure provide an alternating-current charging assembly and an alternating-current charging device, so as to solve the technical problem that in a current alternating-current charging pile, each functional device is connected by wires, which leads to large volume of the charging pile, complicated wiring, and low production efficiency, thus being disadvantaged to the layout and promotion of the charging pile.

Based on a first aspect, the embodiments of the present disclosure provide an alternating-current charging assembly, including a casing, a circuit board and a functional mechanism. The circuit board is mounted inside the casing, and the circuit board is provided with an input end and an output end. The functional mechanism is arranged on the circuit board, and is configured to control the connection and disconnection between the input end and the output end based on an energization parameter of the circuit board.

In some embodiments, the functional mechanism includes a control unit, a first electric leakage detection unit and a switch element all arranged on the circuit board; the switch element is connected between the control unit and the output end; the first electric leakage detection unit is connected to the control unit, and is configured to detect a current value of the current flowing into the first electric leakage detection unit; and the control unit is configured to control the connection and disconnection of the switch element based on the current value detected by the first electric leakage detection unit.

In some embodiments, the first electric leakage detection unit includes an electric leakage unit casing, and the electric leakage unit casing and the casing are integrally structured.

In some embodiments, the alternating-current charging assembly further includes a second electric leakage detection unit located outside the casing, the second electric leakage detection unit is electrically connected to the input end, and the second electric leakage detection unit is configured to control the connection and disconnection of the second electric leakage detection unit based on the current value of the current flowing into the second electric leakage detection unit; the functional mechanism includes a control unit and a switch element both arranged on the circuit board, and the switch element is connected between the control unit and the output end; and the control unit is configured to control the connection and disconnection of the switch element based on the energization parameter.

In some embodiments, the functional mechanism further includes an electric energy metering unit disposed on the circuit board, and the electric energy metering unit is connected between the input end and the control unit.

In some embodiments, the casing includes a main casing having an opening on one side and a cover body covering the opening, and the cover body and the main casing enclose a casing cavity of the casing. A first threading hole for lead sealing is arranged at the opening of the main casing, a second threading hole for lead sealing is arranged in the cover body, and the first threading hole and the second threading hole are arranged opposite to each other.

In some embodiments, the functional mechanism further includes a display, the display is connected with the control unit, and the display is configured to display status information of the alternating-current charging assembly and electric energy metering information of the electric energy metering unit.

In some embodiments, the circuit board includes a first circuit board and a second circuit board located on one side of the first circuit board in a thickness direction, and the second circuit board is electrically connected to the first circuit board. The switch element is disposed on the first circuit board, and is located between the first circuit board and the second circuit board. The control unit, the electric energy metering unit and the display are disposed on the second circuit board.

Based on a second aspect, the embodiments of the present disclosure provide an alternating-current charging device, including a charging gun and the alternating-current charging assembly described in the first aspect, and an output end of the circuit board is connected to the charging gun.

In some embodiments, the alternating-current charging device further includes a guide rail, a sliding slot is arranged in the casing of the alternating-current charging assembly, and the sliding slot is in sliding fit with the guide rail.

In the alternating-current charging assembly and the alternating-current charging device provided by the embodiments of the present disclosure, by disposing the circuit board in the casing, and disposing the functional mechanism on the circuit board, that is, integrating the functional mechanism and the circuit board, the space occupied by the wires connecting each constituent unit of the functional mechanism can be saved, the overall structure of the alternating-current charging assembly is enabled to be compact, the overall structure of the alternating-current charging assembly can be simplified, and layout and promotion are facilitated. In addition, since multiple functional mechanisms are directly mounted on the circuit board, mounting and connection of the functional mechanisms can also be facilitated, the mounting efficiency can be improved, and the mounting cost can be saved.

The structure, and other objects and beneficial effects of the present disclosure will be detailed in conjunction with the accompanying drawings to ensure that the description of the preferred embodiments is more obvious and easy to understand.

### Brief Description of the Drawings

Fig. 1a is a schematic structural diagram of an alternating-current charging device based on an embodiment of the present disclosure.
Fig. 1b is a schematic diagram of an overall structure of an alternating-current charging assembly based on an embodiment of the present disclosure.
Fig. 2 is a functional block diagram of an alternating-current charging assembly based on an embodiment of the present disclosure.
Fig. 3 is a schematic diagram of an explosion structure of an alternating-current charging assembly based on an embodiment of the present disclosure.
Fig. 4 is a front view of an alternating-current charging assembly based on an embodiment of the present disclosure.
Fig. 5 is a schematic structural diagram of assembly of a circuit board and a functional mechanism in an alternating-current charging assembly based on an embodiment of the present disclosure.
Fig. 6 is a front view of Fig. 5.
Fig. 7 is a schematic structural diagram of an alternating-current charging assembly based on other embodiments of the present disclosure.
Fig. 8 is a schematic structural diagram of an alternating-current charging assembly of Fig. 7 after a terminal protective cover is removed.
Fig. 9 is a schematic structural diagram of the other side of an alternating-current charging assembly of Fig. 7.
Fig. 10 is an explosive view of an alternating-current charging assembly of Fig. 7 from a viewing angle.
Fig. 11 is an explosive view of an alternating-current charging assembly of Fig. 7 from another viewing angle.
Fig. 12 is a schematic structural diagram of an alternating-current charging assembly of Fig. 7 after a casing is removed.
Fig. 13 is a schematic structural diagram of an alternating-current charging assembly based on other embodiments of the present disclosure.
Fig. 14 is a schematic structural diagram of the other side of an alternating-current charging assembly of Fig. 13.
Fig. 15 is a functional block diagram of an alternating-current charging assembly of Fig. 13.
Fig. 16 is an explosive view of an alternating-current charging assembly of Fig. 13 from a viewing angle.
Fig. 17 is an explosive view of an alternating-current charging assembly of Fig. 13 from another viewing angle.
Fig. 18 is a schematic structural diagram of an alternating-current charging assembly of Fig. 13 after a casing is removed.

### Illustration of drawing marks:

10- alternating-current charging assembly; 20- guide rail; 100- casing; 200- circuit board; 300-functional mechanism; 400- second electric leakage detection unit; 510- connecting wire; 520-insulating sleeve; 101- main casing; 1011- first threading hole; 1012- opening; 102- cover body; 1021- second threading hole; 104- sliding slot; 201- input end; 202- output end; 203- first circuit board; 204- second circuit board; 205- support column; 206- pin header; 301- first electric leakage detection unit; 3011- detection body; 3012- switch handle; 3015- electric leakage unit casing; 302-control unit; 303- metering unit; 304- expansion interface; 305- switch element; and 306- display.

### Detailed Description of the Embodiments

Clear and complete descriptions will be made on technical solutions in the embodiments of the present disclosure below in combination with drawings in the embodiments of the present disclosure. It is apparent that the described embodiments are a part rather than all of embodiments of the present disclosure. On the basis of the embodiments in the present disclosure, all other embodiments obtained by those of ordinary skill in the technical field without creative efforts fall into the scope of protection of the present disclosure.

Terms "first" and "second" in the description of the embodiments of the present disclosure are only used for describing purposes, and cannot be understood as indicating or implying relative importance or implicitly indicating the number of indicated technical features. Therefore, the features defined with "first" and "second" can include at least one of the features explicitly or implicitly. In the descriptions of the present disclosure, "multiple" means at least two, for example, two and three, unless otherwise limited definitely and specifically.

In the present disclosure, unless otherwise expressly specified and defined, terms "mounting", "mutual connection", "connection", and "fixing" shall be generally understood. For example, the term can be fixed connection, or detachable connection, or integral connection. The term can be direct connection, or indirect connection through an intermediate, or communication inside two elements, or interactive relationship between two elements, unless otherwise expressly defined. Those of ordinary skill in the art can understand the specific meanings of the terms in the present disclosurebased on specific conditions.

In the present disclosure, unless otherwise expressly specified and defined, a first feature "on" or "under" a second feature can mean a direct contact between the first and second features, or an indirect contact between the first and second features through the intermediate. Moreover, the first feature being "above", "over" and "above" the second feature can mean the first feature being directly above or obliquely above the second feature, or simply means that the first feature level has a higher level than the second feature level. The first feature being "below", "under" and "on the lower side of" the second feature can mean that the first feature is directly below or obliquely below the second feature, or simply means that the first feature has a lower level than the second feature.

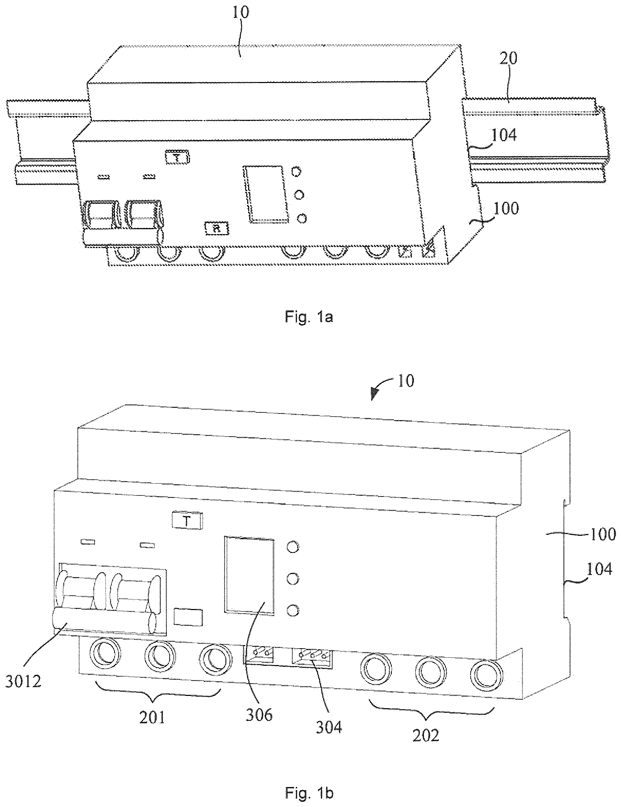

In the description of the present disclosure, it is to be understood that the orientation or location relationships (if any) indicated by the terms "inner", "outer", "upper", "bottom", "front" and "rear" are orientation or location relationships shown on the basis of Fig. 1, which are only for the convenience of describing the present disclosure and simplifying the description, rather than indicating or implying that the referred apparatuses or elements must have a specific orientation, and be constructed and operated in the specific orientation. Therefore, it cannot be understood as a limitation to the present disclosure.

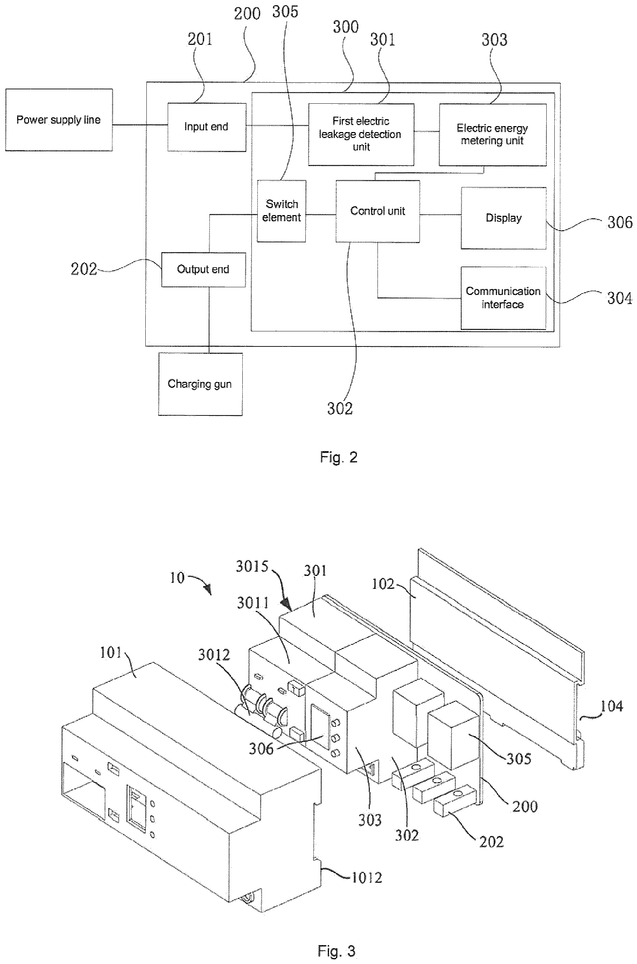

Referring to Figs. 1b, 2 and 3, Fig. 1b is a schematic diagram of an overall structure of an alternating-current charging assembly based on an embodiment of the present disclosure. Fig. 2 is a functional block diagram of an alternating-current charging assembly based on an embodiment of the present disclosure. Fig. 3 is a schematic diagram of an explosion structure of an alternating-current charging assembly based on an embodiment of the present disclosure. Based on a first aspect of the embodiments of the present disclosure, provided is an alternating-current charging assembly, including: a casing 100, a circuit board 200 and a functional mechanism 300.

The circuit board 200 is mounted in the casing 100, and the circuit board 200 is provided with an input end 201 and an output end 202. It is to be understood that: the circuit board 200 can be integrated, printed or printed with a connecting line, and the connecting line is connected between the input end 201 and the output end 202.

As shown in Fig. 2, the input end 201 is configured to be connected to a power supply line (e.g., a municipal grid or a national grid), and the output end 202 is configured to be connected to a charging gun.

Specifically, the power supply line can provide a voltage of 220V or a voltage of 380V.

The functional mechanism 300 is disposed on the circuit board 200 and is configured to control the connection and disconnection between the input end 201 and the output end 202 based on an energization parameter of the circuit board 200.

Specifically, in the embodiment of the present disclosure, the functional mechanism 300 can be configured to detect the energization parameter such as the output power of the connecting line on the circuit board 200 and the amount of flowing electricity, and the connection and disconnection of the connecting line are controlled based on the detected energization parameter. For example, after the charging gun is docked to an charging interface of a new energy vehicle, the connecting line is controlled to access, and the new energy vehicle is charged. Meanwhile, the amount of electricity flowing through the connecting line is recorded, thus metering the amount of electricity, etc.

Optionally, in the embodiment of the present disclosure, the functional mechanism 300 can be mounted on the circuit board 200 by welding. For example, the functional mechanism 300 and the circuit board 200 are soldered by means of wave soldering. Of course, the functional mechanism 300 can also be welded on the circuit board 200 by spot welding, tin soldering or brazing.

In some specific examples, it is also possible to solder a connection contact (e.g., a connection female header or male header) on the connecting line of the circuit board 200, and the functional mechanism 300 is plugged into the connection contact on the connecting line by means of the connection male header or the connection female header, and then is fixed onto the circuit board 200 by means of a fixing part such as a screw, a bolt or a threaded rod. It is to be understood that in this case, a threaded hole or a threaded post can be disposed on the circuit board 200.

Optionally, in the embodiment of the present disclosure, the working power of the alternating-current charging assembly can be 3 kw, 5 kw, 7 kw, etc, and of course, can also be power such as 15 kw, 30 kw, etc., which is not limited in the embodiment of the present disclosure.

Specifically, in the embodiment of the present disclosure, the casing 100 can be made of an insulating material, such as rigid plastic. Of course, the casing 100 can also be made of another insulating material used in a conventional art, which will not be listed one by one in the embodiment of the present disclosure.

Further, as shown in Fig. 3, the casing 100 includes a main casing 101 having an opening 1012 on one side, and a cover body 102 covering the opening 1012 of the main casing 101. The cover body 102 and the main casing 101 enclose a casing cavity of the casing 100.

During specific production, the circuit board 200 with the functional mechanism 300 mounted is mounted in the main casing 101. Specifically, the circuit board 200 can be fixed in the main casing 101 by the fixing part such as the screw, the bolt or the threaded rod. Then, the cover body 102 is disposed covering the opening 1012 of the main casing 101, so that the circuit board 200 and the functional mechanism 300 disposed on the circuit board 200 are packaged in the casing 100. Thus, the circuit board 200 and the functional mechanism 300 in a mounting chamber can be effectively protected, and the service life of the alternating-current charging assembly 10 can be prolonged.

In the embodiment of the present disclosure, as shown in Fig. 3, the casing 100 is filled with an insulating and heat-conducting material.

The insulating and heat-conducting material can be thermally conductive adhesive or thermally conductive silica gel. The thermally conductive adhesive can be filled in the main casing 101 by integral potting, and then the cover body 102 is disposed covering the opening of the main casing 101. Thus, the integrally potted thermally conductive adhesive can form a good seal with the cover body 102, which can further strengthen the protection of the circuit board 200 and the functional mechanism 300.

By filling the casing 100 with the insulating and heat-conducting material, the insulating and heat-conducting material can quickly dissipate the heat generated by the functional mechanism 300, which can improve the heat dissipation efficiency of the alternating-current charging assembly 10 and avoid overheating of the functional mechanism 300. That is, after the insulating and heat-conducting material is filled, the charging power of the alternating-current charging assembly 10 can be further improved.

in the embodiment of the present disclosure, by disposing the circuit board 200 in the casing 100, and disposing the functional mechanism 300 on the circuit board 200, that is, integrating the functional mechanism 300 and the circuit board 200, the space occupied by the wires connecting each constituent unit of the functional mechanism 300 can be saved, the overall structure of the alternating-current charging assembly 10 is enabled to be compact, the overall structure of the alternating-current charging assembly 10 can be simplified, and layout and promotion are facilitated. In addition, since a of functional mechanisms 300 are directly mounted on the circuit board 200, mounting and connection of the functional mechanisms 300 can also be facilitated, the mounting efficiency can be improved, and the mounting cost can be saved.

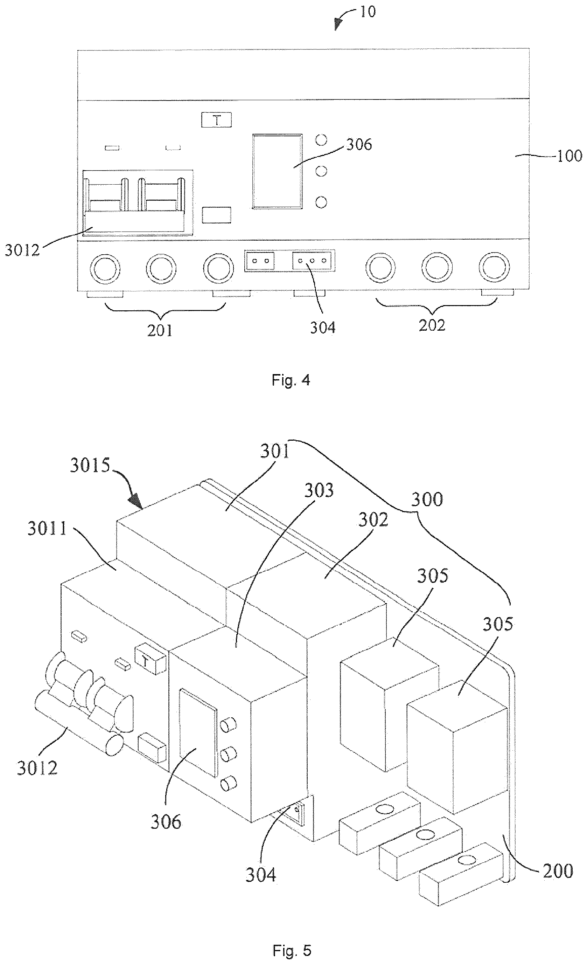

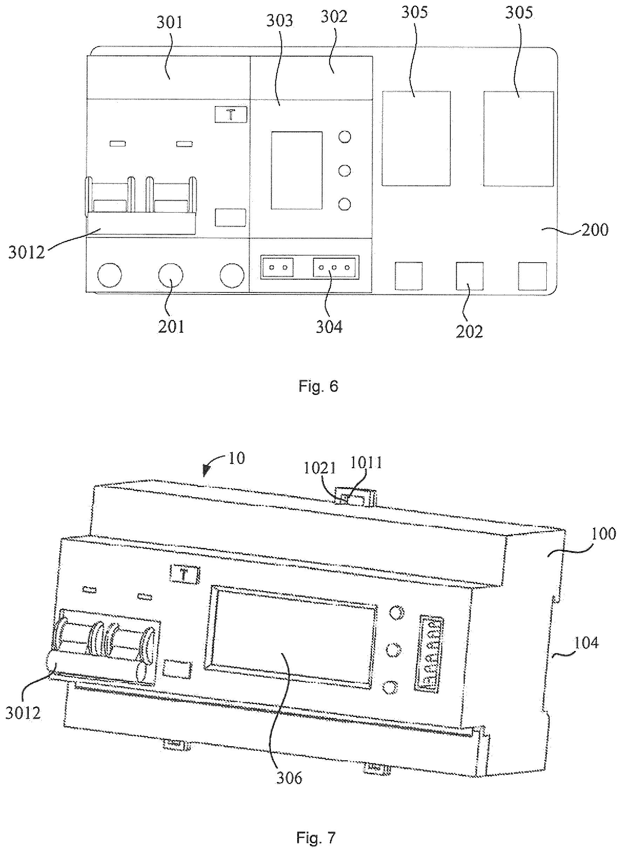

Referring to Figs. 2-6, Fig. 4 is a front view of an alternating-current charging assembly based on an embodiment of the present disclosure. Fig. 5 is a schematic structural diagram of assembly of a circuit board and a functional mechanism in an alternating-current charging assembly based on an embodiment of the present disclosure. Fig. 6 is a front view of Fig. 4. The functional mechanism 300 includes a control unit 302, a first electric leakage detection unit 301 and a switch element 305 all disposed on the circuit board 200. The switch element 305 is connected between the control unit 302 and the output end 202.

The first electric leakage detection unit 301 is connected to the control unit 302 and is configured to detect a current value flowing into the first electric leakage detection unit 301. The control unit 302 is configured to control the connection and disconnection of the switch element 305 based on the current value detected by the first electric leakage detection unit 301.

As shown in Fig. 2, the first electric leakage detection unit 301 can be connected between the input end 201 and the control unit 302, or a unit output end of the first electric leakage detection unit 301 can be connected to the control unit 302. A unit input end of the first electric leakage detection unit 301 is the input end 201 of the circuit board 200.

It is to be understood that the charging piles for charging new energy vehicles are usually disposed in parking lots, garages or other places, and in many cases, the charging piles are disposed in the open air. Therefore, special attention should be paid to the safety of the use of electric energy. In the embodiment of the present disclosure, by disposing the first electric leakage detection unit 301, the first electric leakage detection unit 301 can detect whether the circuit board 200 has leakage or short-circuit, and when the leakage or short-circuit is detected, the switch element 305 is controlled to be disconnected, so as to ensure the safety of using the alternating-current charging assembly 10.

It is to be understood that the first electric leakage detection unit 301 can convert the detected current value of the current flowing into the first electric leakage detection unit 301 into a leakage signal and send the leakage signal to the control unit 302. The leakage signal is processed by the control unit 302. The current value detected by the first electric leakage detection unit 301 is compared with an upper limit of the safe current value (for example, being between 30 mA -100 mA). When the current value is greater than the upper limit of the safe current value, the switch element 305 is controlled to be disconnected. For example, when the current value of the current flowing into the first electric leakage detection unit 301 is less than 15 mA, operation can not be perarranged. When the current value of the current flowing into the first electric leakage detection unit 301 is relatively large, e.g., greater than 30 mA, the control unit 302 controls the switch element 305 to be disconnected, so as to achieve the purpose of protection.

Specifically, as shown in Figs. 1b, 3 and 5, in the embodiment of the present disclosure, the first electric leakage detection unit 301 includes: a detection body 3011 and a switch handle 3012; the detection body 3011 is disposed on the circuit board 200; the switch handle 3012 is connected to the detection body 3011 and is located on the side of the detection body 3011 away from the circuit board 200; and the switch handle 3012 extends to an outer part of the casing 100.

Thus, by arranging the switch handle 3012, in the case of failure or leakage of the alternating-current charging assembly 10, the alternating-current charging assembly 10 can be stopped timely, the connection and disconnection of the entire device circuit can be controlled, and the alternating-current charging assembly 10 and the charged new energy vehicle can be effectively protected. Dangerous situations are avoided.

Optionally, in the embodiment of the present disclosure, the first electric leakage detection unit 301 can be an air switch or an electric leakage protection switch. The switch handle 3012 can be a D-type handle or a B-type handle, etc. The specific form of the switch handle 3012 is not limited in the embodiment of the present disclosure.

It is to be understood that by setting the switch handle 3012, after the charging is completed, the entire alternating-current charging assembly 10 can be powered off through the switch handle 3012, so that when the alternating-current charging assembly 10 is not in use, the alternating-current charging assembly 10 can be well protected to avoid the occurrence of dangerous situations of electric leakage.

Optionally, in the embodiment of the present disclosure, the control unit 302 can be a Central Processing Unit (CPU), a Microcontroller Unit (MCU), or a Field-Programmable Gate Array (FPGA), etc.

In the embodiment of the present disclosure, the switch element 305 can be an automatic switch that uses a small current to control the operation of a large current, such as a relay. The relay is an electrical appliance that makes a predetermined step change in a controlled quantity in an electrical output circuit when the change of an input quantity (excitation quantity) reaches a specified requirement. The relay plays the role of automatic adjustment, safety protection and conversion circuit in the circuit. Specifically, in the embodiment of the present disclosure, the relay can be an on-board relay.

The on-board relay controls the connection and disconnection between the connecting line and the charging gun based on a control signal of the control unit 302. For example, after a user swipes a card or scans a two-dimensional code, the control unit 302 outputs the control signal to the relay, and the relay controls the conduction between the connecting line and the charging gun. After the user completes charging, for example, when the charging gun is pulled out or after payment is made, the control unit 302 outputs the control signal to the relay, and the relay switches to a disconnected status.

The relationship between the first electric leakage detection unit 301 and the casing 100 is not unique. In some embodiments, as shown in Fig. 3, the first electric leakage detection unit 301 includes an electric leakage unit casing 3015, and the electric leakage unit casing 3015 and the casing 100 are designed in a split manner.

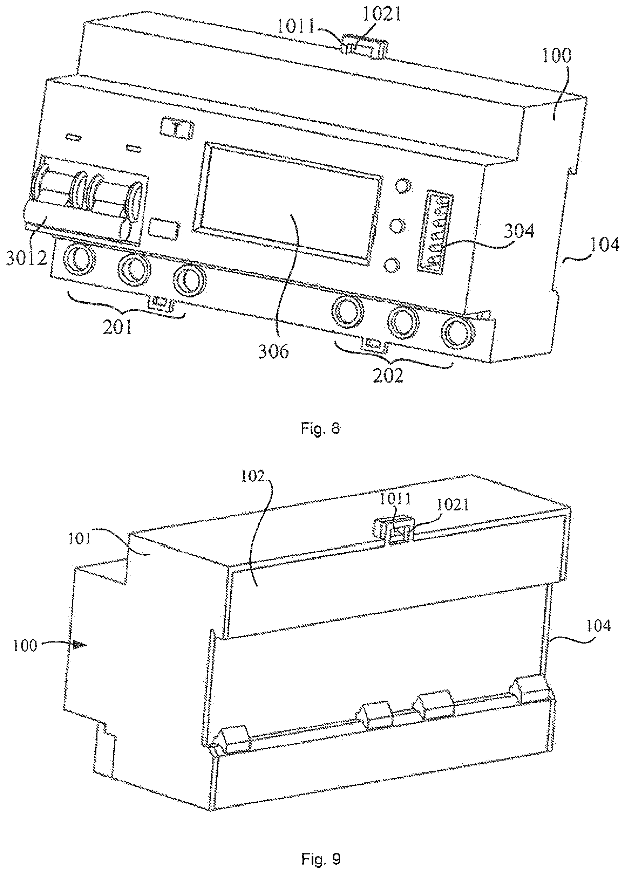

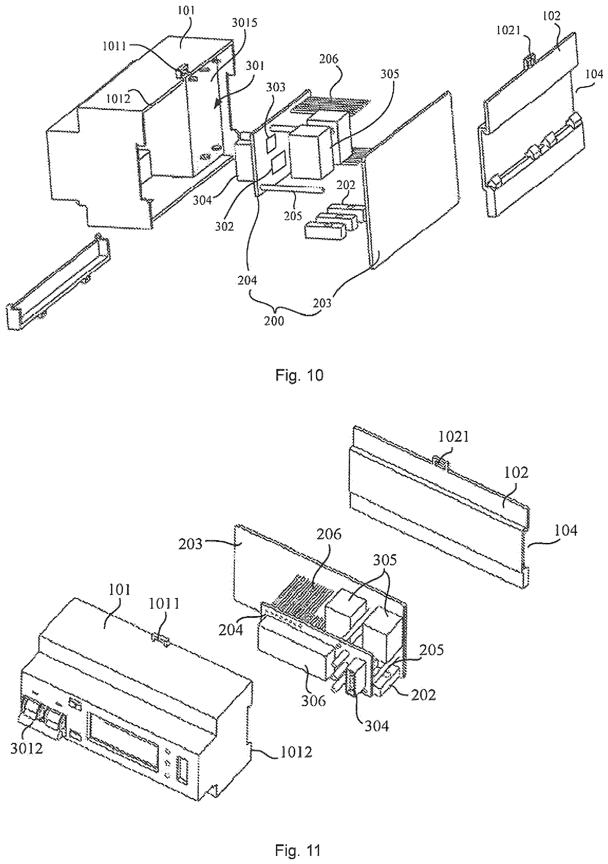

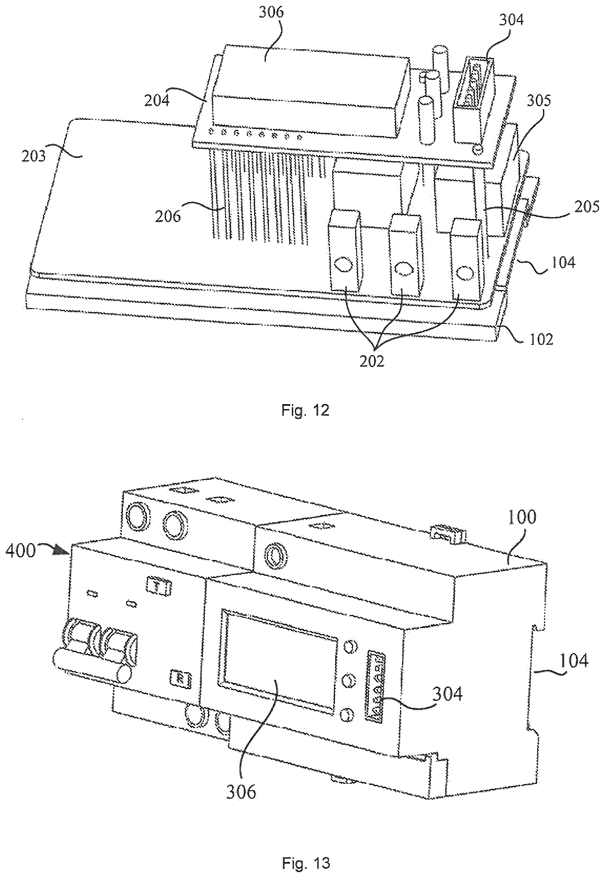

In other embodiments, as shown in Figs. 7 to 12, Fig. 7 is a schematic structural diagram of an alternating-current charging assembly 10 based on other embodiments of the present disclosure. Fig. 8 is a schematic structural diagram of an alternating-current charging assembly 10 of Fig. 7 after a terminal protective cover is removed. Fig. 9 is a schematic structural diagram of the other side of an alternating-current charging assembly 10 of Fig. 7. Fig. 10 and Fig. 11 are explosive views of an alternating-current charging assembly 10 of Fig. 7 from different viewing angles. Fig. 12 is a schematic structural diagram of an alternating-current charging assembly of Fig. 7 after a casing 100 is removed.

The electric leakage unit casing 3015 and the casing 100 are integrally structured.

By integrally molding the electric leakage unit casing 3015 with the casing 100, the number of parts of the alternating-current charging assembly 10 can be reduced, thereby facilitating the assembly of the alternating-current charging assembly 10 and improving the assembly efficiency of the alternating-current charging assembly 10.

Continuously referring to Fig. 2, Fig. 3 and Fig. 5, in the embodiment of the present disclosure, the functional mechanism 300 further includes: an electric energy metering unit 303, and the electric energy metering unit 303 is connected between the input end 201 and the control unit 302 and the electric energy metering unit 303 is configured to meter the amount of electricity flowing through the electric energy metering unit 303, so that the user can easily learn the amount of electricity charged during use.

Specifically, as shown in Fig. 2, the electric energy metering unit 303 is connected between the first electric leakage detection unit 301 and the control unit 302, so that the first electric leakage detection unit 301 can play a certain protective role on the electric energy metering unit 303 to avoid excessive current from damaging the power metering unit 303.

In the embodiment of the present disclosure, the electric energy metering unit 303 can be an electric energy metering chip (for example, a metering chip having a model such as ADE7755, SA9904B, ATT7026A, CS5463 and RN8290D). In some specific examples, the electric energy metering chip can be a metering chip that meets the requirements of the JJG 1148-2018 alternating-current charging of electric vehicles in the national metrology and identification regulations. Thus, the alternating-current charging assembly 10 provided in the embodiment of the present disclosure can not only be used for charging new energy vehicles, but also can be used as a common electric meter, which expands the use range of the alternating-current charging assembly 10.

In some embodiments, as shown in Figs. 7 to 10, a first threading hole 1011 for lead sealing is arranged at the opening 1012 of the main casing 101, a second threading hole 1021 for lead sealing is arranged in the cover body 102, and the first threading hole 1011 and the second threading hole 1021 are arranged opposite to each other. Thus, after the cover body 102 is covered on the opening of the main casing 101, the connecting line can penetrate the first threading hole 1011 and the second threading hole 1021, and then the first threading hole 1011 and the second threading hole 1021 are subjected to lead sealing. After the lead sealing, the main casing 101 and the cover body 102 cannot be easily opened, so as to prevent the user from tampering with the electric energy metering unit 303 located in the casing 100 to affect the accuracy of metering of the electric energy by the electric energy metering unit 303.

Usually, some communication functions can be used when the new energy vehicle is charged with the charging pile. For example, consumption by scanning a QR code, consumption by swiping a card, or binding to the new energy vehicle via Bluetooth, etc. Therefore, as shown in Figs. 2 and 4, in the embodiment of the present disclosure, the functional mechanism 300 further includes: a communication interface 304, the communication interface 304 is connected with the control unit 302, and the communication interface 304 is configured to be connected with the communication unit.

Specifically, in the embodiment of the present disclosure, the communication unit can be a Radio Frequency Identification (RFID), and the charging gun can be unlocked by swiping an RFID card, so as to charge the new energy vehicle. Of course, consumption can also be perarranged by swiping the card by means of RFID, such as collecting fees based on the length of charging time.

It is to be understood that the RFID above is only described as an example, and in the embodiment of the present disclosure, the communication unit can also be Bluetooth, Wireless Fidelity (Wi-Fi), the 4th generation mobile communication technology (4G), the 5th generation mobile networks (5G) or a card reader, etc.

Through the functional communication interface 304, various communication functions of the alternating-current charging assembly 10 can be effectively expanded, which brings convenience for the user to use.

In some possible manners, the communication interface 304 can also be connected to a function expansion board, and the communication unit above can be integrated on the function expansion board at the same time.

Further, referring to Fig. 1 and Fig. 6, Fig. 6 is a front view of Fig. 5. The functional mechanism 300 provided by the embodiment of the present disclosure further includes a display 306, the display 306 is connected with the control unit 302, and the display 306 is configured to display status information of the alternating-current charging assembly 10 and electric energy metering information of the electric energy metering unit 303.

Specifically, the status information of the alternating-current charging assembly 10 includes at least one of the following information: a charging capacity, current charging status and a fault code. It is to be understood that the status information can also include: charging duration, cost information, etc.

Thus, on the one hand, convenience is brought for the user to learn the charging situation; on the other hand, convenience is also brought for a debugger to debug and troubleshoot the alternating-current charging assembly 10, thus improving the trouble shooting efficiency.

Optionally, the display 306 can be a touch screen or a touch control screen, and a virtual interactive key can be disposed on the touch screen or the touch control screen. The alternating-current charging assembly 10 can be debugged and troubleshot by means of the virtual interactive key. In some possible manners, the display 306 can also be a common liquid crystal display screen, and the interactive key can be a physical key disposed on one side of the display 306.

Of course, in some possible manners, the control unit 302 can also be connected with multipleindicator lights, and multiple indicator lights can extend to the outside of the casing 100, or a transparent cover can be disposed on the casing 100, and the indicator lights can extend into the transparent cover. The indicator light can be one or more of a working status indicator light, a power status indicator light or a fault alarm indicator light.

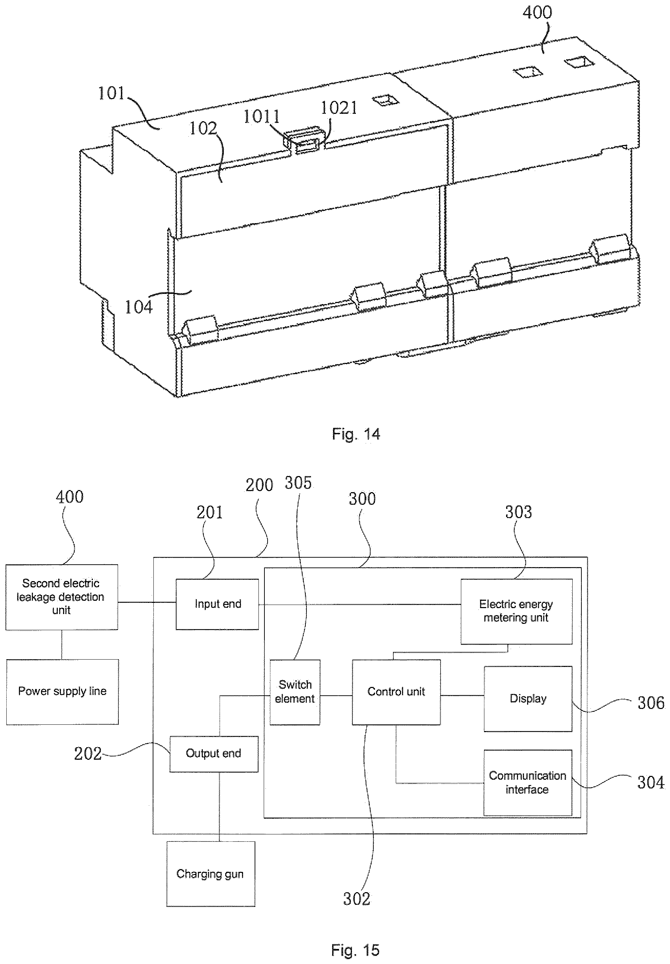

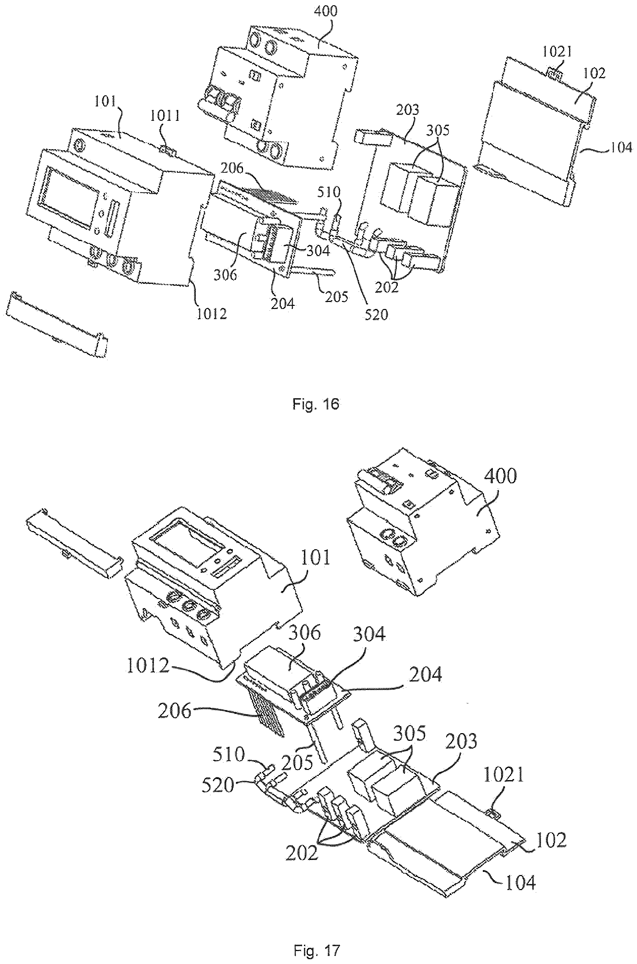

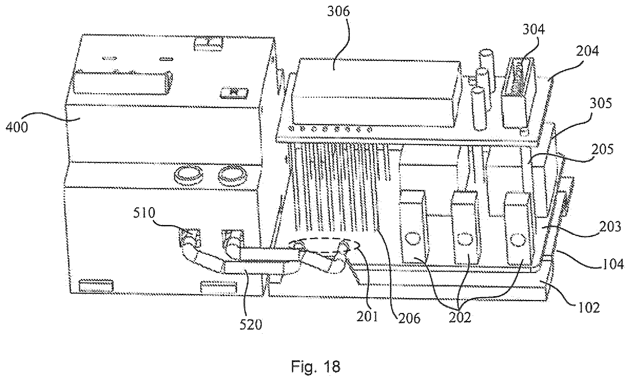

As shown in Figs. 13 to 18, Fig. 13 is a schematic structural diagram of an alternating-current charging assembly 10 based on other embodiments of the present disclosure. Fig. 14 is a schematic structural diagram of the other side of an alternating-current charging assembly 10 of Fig. 13. Fig. 15 is a functional block diagram of an alternating-current charging assembly 10 of Fig. 13. Fig. 16 and Fig. 17 are explosive views of an alternating-current charging assembly 10 of Fig. 13 from different viewing angles. Fig. 18 is a schematic structural diagram of an alternating-current charging assembly 10 of Fig. 13 after a casing 100 is removed.

The alternating-current charging assembly 10 further includes a second electric leakage detection unit 400 located outside the casing 100, the second electric leakage detection unit 400 is electrically connected to the input end 201, and the second electric leakage detection unit 400 is configured to control the connection and disconnection of the second electric leakage detection unit 400 based on the current value of the current flowing into the second electric leakage detection unit 400.

The functional mechanism 300 includes a control unit 302 and a switch element 305 both disposed on the circuit board 200, and the switch element 305 is connected between the control unit 302 and the output end 202; and the control unit 302 is configured to control the connection and disconnection of the switch element 305 based on the energization parameter of the circuit board 200. The energization parameter above can be output power, the amount of electricity flowing on the circuit board 200, etc., which is not specifically limited herein.

In the embodiment, since the second electric leakage detection unit 400 is disposed outside the casing 100, an existing electric leakage detection device, such as an air switch, can be used as the second electric leakage detection unit 400, so that the the design cost of the second electric leakage detection unit 400 can be reduced, and accordingly the design and manufacturing cost of the alternating-current charging assembly 10 can be reduced.

As shown in Fig. 13 and Fig. 18, the second electric leakage detection unit 400 can be fixedly connected with the casing 100, so that the casing 100 and the second electric leakage detection unit 400 can be arranged as a whole, so as to facilitate the movement and mounting of the alternating-current charging assembly 10.

As shown in Fig. 13 and Fig. 18, the second electric leakage detection unit 400 includes an input wiring terminal and an output wiring terminal, and the output wiring terminal of the second electric leakage detection unit 400 and the input end 201 are electrically connected through two connecting wires 510. Specifically, one end of the connecting wire 510 is connected to the output wiring terminal of the second electric leakage detection unit 400, and the other end extends into the casing 100 and is electrically connected to the input end 201 of the circuit board 200.

In order to avoid short circuit between the two connecting wires 510, as shown in Fig. 18, each connecting wire 510 is sheathed with an insulating sleeve 520, so that the two connecting wires 510 can be insulated to prevent the short circuit when the two connecting wires 510 contact each other.

In some embodiments, as shown in Figs. 12 and 18, the circuit board 200 includes a first circuit board 203 and a second circuit board 204 located on one side of the first circuit board 203 in a thickness direction. The second circuit board 204 is electrically connected to the first circuit board 203.

The switch element 305 is disposed on the first circuit board 203 and is located between the first circuit board 203 and the second circuit board 204. The control unit 302, the electric energy metering unit 303 and the display 306 are disposed on the second circuit board 204.

Through such an arrangement, the switch element 305 can make full use of a space between the first circuit board 203 and the second circuit board 204, thereby improving the space utilization rate in the casing 100, and meanwhile, the switch element 305, the control unit 302, the electric energy metering unit 303 and the display 306 are respectively disposed on the first circuit board 203 and the second circuit board 204, so that the arrangement of the functional mechanism on the circuit board 200 can be more compact, and further facilitating the reduction of the volume of the casing 100, so as to reduce the space occupied by the alternating-current charging assembly 10.

The second circuit board 204 can be a double-layer circuit board, so that the control unit 302, the electric energy metering unit 303 and the display 306 can be disposed on both sides of the second circuit board 204. For example, as shown in Fig. 10 and Fig. 11, the display 306 is disposed on one side of the second circuit board 204, and the control unit 302 and the electric energy metering unit 303 are disposed on the other side of the second circuit board 204, so that the arrangement of the control unit 302, the electric energy metering unit 303 and the display 306 on the second circuit board 204 can be optimized, so as to further improve the space utilization rate in the casing 100.

As shown in Fig. 12 and Fig. 18, a support column 205 can be disposed between the first circuit board 203 and the second circuit board 204, so that a space for accommodating the switch element 305 can be arranged between the first circuit board 203 and the second circuit board 204.

As shown in Fig. 12 and Fig. 18, the first circuit board 203 and the second circuit board 204 can be electrically connected through a pin header 206. Since the pin header 206 belongs to a rigid body and are not prone to shaking, the reliability of electrical connection between the first circuit board 203 and the second circuit board 204 can be ensured.

Referring to Fig. 1a and Fig. 2, Fig. 1a is a schematic structural diagram of an alternating-current charging device based on an embodiment of the present disclosure. The alternating-current charging device includes the alternating-current charging assembly 10 provided by any optional implementation in the first aspect of the present disclosure and a charging gun. After the charging gun is docked to the charging interface of the new energy vehicle, the new energy vehicle can be charged.

In some embodiments, as shown in Fig. 1a and Fig. 2, the alternating-current charging device further includes a guide rail 20, a sliding slot 104 is arranged in the casing 100, and the sliding slot 104 is in sliding fit with the guide rail 20. The sliding slot 104 can be disposed on the cover body 102.

In specific implementation, the guide rail 20 can be arranged in a parking lot together with the establishment of the parking lot, an underground garage or a three-dimensional garage. When the alternating-current charging assembly 10 is arranged, the sliding slot is in sliding fit with the guide rail 20. Thus, the mounting and arrangement of the alternating-current charging assembly 10 can be facilitated and the mounting and arrangement efficiency can be improved. Moreover, the alternating-current charging assembly 10 can also be moved along the guide rail 20. Thus, the alternating-current charging assembly 10 can be shared with the adjacent parking slot, which can save costs.

Moreover, when the alternating-current charging assembly 10 fails, the alternating-current charging assembly 10 can be easily disassembled from the guide rail 20 and replaced directly, and the faulty alternating-current charging assembly 10 can be returned to a manufacturer for maintenance or troubleshooting. Thus, the replacement efficiency of the alternating-current charging assembly 10 in case of failure can be improved, the use of the user is not affected, and the user experience can be improved.

Optionally, in the embodiment of the present disclosure, the guide rail 20 can be a clamping rail with a width of 30 mm -40 mm. In some specific examples, the guide rail 20 can be a standard clamping rail with a width of 35 mm. It is to be noted here that the numerical values and numerical ranges involved in the present disclosure are approximate values, and there can be errors in a certain range due to the influence of the manufacturing process, and those skilled in the art can consider these errors to be ignored.

The above is only the specific implementation mode of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subjected to the scope of protection of the claims.

## Claims

1. An alternating-current charging assembly, comprising:
a casing;
a circuit board, the circuit board being mounted inside the casing, and the circuit board being provided with an input end and an output end; and
a functional mechanism, arranged on the circuit board, and configured to control connection and disconnection between the input end and the output end based on an energization parameter of the circuit board.

2. The alternating-current charging assembly as claimed in claim 1, wherein
the functional mechanism comprises a control unit, a first electric leakage detection unit and a switch element all arranged on the circuit board;
the switch element is connected between the control unit and the output end;
the first electric leakage detection unit is connected with the control unit, and is configured to detect a current value of the current flowing into the first electric leakage detection unit; and
the control unit is configured to control the connection and disconnection of the switch element based on the current value detected by the first electric leakage detection unit.

3. The alternating-current charging assembly as claimed in claim 2, wherein
the first electric leakage detection unit comprises an electric leakage unit casing, and the electric leakage unit casing and the casing are integrally structured.

4. The alternating-current charging assembly as claimed in claim 1, wherein
the alternating-current charging assembly further comprises a second electric leakage detection unit located outside the casing, the second electric leakage detection unit being electrically connected with the input end, and the second electric leakage detection unit being configured to control the connection and disconnection of the second electric leakage detection unit based on the current value of the current flowing into the second electric leakage detection unit;
the functional mechanism comprises a control unit and a switch element both disposed on the circuit board, the switch element being connected between the control unit and the output end; and
the control unit is configured to control the connection and disconnection of the switch element based on the energization parameter.

5. The alternating-current charging assembly as claimed in any one of claims 2 to 4, wherein the functional mechanism further comprises an electric energy metering unit disposed on the circuit board, and the electric energy metering unit is connected between the input end and the control unit.

6. The alternating-current charging assembly as claimed in claim 5, wherein the casing comprises a main casing having an opening on one side and a cover body covering the opening, the cover body and the main casing enclosing a casing cavity of the casing; and
a first threading hole for lead sealing is arranged at the opening of the main casing, a second threading hole for lead sealing being arranged in the cover body, and the first threading hole and the second threading hole being disposed opposite to each other.

7. The alternating-current charging assembly as claimed in claim 5, wherein the functional mechanism further comprises a display, the display is connected with the control unit, and the display is configured to display status information of the alternating-current charging assembly and electric energy metering information of the electric energy metering unit.

8. The alternating-current charging assembly as claimed in claim 7, wherein
the circuit board comprises a first circuit board and a second circuit board located on one side of the first circuit board in a thickness direction, the second circuit board being electrically connected with the first circuit board; and
the switch element is disposed on the first circuit board, and is located between the first circuit board and the second circuit board, and the control unit, the electric energy metering unit and the display are disposed on the second circuit board.

9. An alternating-current charging device, comprising a charging gun and the alternating-current charging assembly as claimed in any one of claims 1 to 8, wherein an output end of the circuit board is connected with the charging gun.

10. The alternating-current charging device as claimed in claim 9, wherein the alternating-current charging device further comprises a guide rail, a sliding slot is arranged in a casing of the alternating-current charging assembly, and the sliding slot is in sliding fit with the guide rail.
